# EUROPEAN PATENT APPLICATION

(11) **EP 4 451 122 A1**
(43) Date of publication of application: **23.10.2024**
(21) Application number: 23844958.1
(22) Date of filing: 06.05.2023
(51) Int. Cl.: G06F 9/451, G06F 9/448, G06F 9/54

(54) **DATA PROCESSING METHOD AND APPARATUS, DEVICE, AND READABLE STORAGE MEDIUM**

(30) Priority: 27.07.2022 CN 202210893349
(71) Applicant: Tencent Technology (Shenzhen) Company Limited, Shenzhen, Guangdong 518057 (CN)
(72) Inventor: HUANG, Weiwei, Shenzhen, Guangdong 518057 (CN); HUANG, Sicheng, Shenzhen, Guangdong 518057 (CN); SUN, Guangdong, Shenzhen, Guangdong 518057 (CN); ZHENG, Shucheng, Shenzhen, Guangdong 518057 (CN); ZHONG, Tingrong, Shenzhen, Guangdong 518057 (CN); HUANG, Ningyuan, Shenzhen, Guangdong 518057 (CN); LI, Shun, Shenzhen, Guangdong 518057 (CN); LIU, Zhuomin, Shenzhen, Guangdong 518057 (CN); ZHU, Bin, Shenzhen, Guangdong 518057 (CN); LI, Bokun, Shenzhen, Guangdong 518057 (CN); HUANG, Canhui, Shenzhen, Guangdong 518057 (CN); FENG, Kemian, Shenzhen, Guangdong 518057 (CN); YU, Chaozhong, Shenzhen, Guangdong 518057 (CN); GU, Sixin, Shenzhen, Guangdong 518057 (CN); ZHUO, Wei, Shenzhen, Guangdong 518057 (CN)
(74) Representative: EP&C
(86) International application number: PCT/CN2023/092457
(87) International publication number: WO 2024/021743

(57) **Abstract**

Disclosed in embodiments of the present application are a data processing method and apparatus, a device, and a readable storage medium. The method comprises: in response to an interaction operation for a subprogram application, generating an interface rendering instruction indicated by the interaction operation, wherein the interface rendering instruction is used for rendering an interaction interface corresponding to the interaction operation; if a rendering framework indicated by the interface rendering instruction is a mobile application development framework, sending the interface rendering instruction to an execution environment of the subprogram application by means of a first communication interface; in the execution environment, calling a second communication interface on the basis of the interface rendering instruction, calling the mobile application development framework by means of the second communication interface, and rendering, on the basis of the mobile application development framework, the interaction interface corresponding to the interaction operation, wherein the second communication interface is a communication interface between a second program language and a third program language, and the third program language is a development language corresponding to the mobile application development framework; and outputting the interaction interface.

## Description

### RELATED APPLICATION

This application claims priority to Chinese Patent Application No. 202210893349.7, entitled "DATA PROCESSING METHOD AND APPARATUS, DEVICE, AND READABLE STORAGE MEDIUM" filed with the China National Intellectual Property Administration on July 27, 2022, which is incorporated herein by reference in its entirety.

### FIELD OF THE TECHNOLOGY

This application relates to the field of computer technologies, and in particular, to a data processing method and apparatus, a device, and a readable storage medium.

### BACKGROUND OF THE DISCLOSURE

With the continuous development of computer technologies, various applications (APPs) continuously emerge. The APPs need to be installed on a smart terminal device (such as a smartphone) before the APPs can be used. However, a large number of APPs installed on a smart terminal device occupy a large amount of memory, which is likely to affect operation of the smart terminal device.

To resolve the foregoing problems, the sub-program application (or sub-application, such as a mini-program application) emerges. The sub-program application is an application that can be used without being downloaded and installed. Currently, as sub-program applications are used increasingly widely, requirements for the sub-program applications are increasingly high. For example, requirements for quality of a display page of a sub-program application are increasingly high.

### SUMMARY

Embodiments of the present disclosure provide a data processing method and apparatus, a computer device, and a readable storage medium, to improve rendering quality while improving rendering efficiency in a rendering service of a sub-program application.

The embodiments of the present disclosure provide a data processing method, including:
generating, in response to an interactive operation for a sub-program application, an interface rendering instruction indicated by the interactive operation, the interface rendering instruction being configured for rendering an interactive interface corresponding to the interactive operation;
transmitting the interface rendering instruction to an execution environment of the sub-program application through a first communication interface if a rendering framework indicated by the interface rendering instruction is a mobile application development framework, the execution environment of the sub-program application being an execution environment of a native application, the native application being a host application of the sub-program application; the first communication interface being a communication interface between a first programming language and a second programming language, the first programming language being a programming language corresponding to the interface rendering instruction, and the second programming language being a programming language corresponding to the native application; and the mobile application development framework being configured to construct a native interactive interface on a native operating system;
invoking, in the execution environment, a second communication interface based on the interface rendering instruction, invoking the mobile application development framework through the second communication interface, and rendering the interactive interface corresponding to the interactive operation based on the mobile application development framework, the second communication interface being a communication interface between the second programming language and a third programming language, the third programming language being a development language corresponding to the mobile application development framework; and
outputting the interactive interface.

The embodiments of the present disclosure further provide a data processing apparatus, including:
an instruction generation module, configured to generate, in response to an interactive operation for a sub-program application, an interface rendering instruction indicated by the interactive operation, the interface rendering instruction being configured for rendering an interactive interface corresponding to the interactive operation;
an instruction transmitting module, configured to transmit the interface rendering instruction to an execution environment of the sub-program application through a first communication interface if a rendering framework indicated by the interface rendering instruction is a mobile application development framework, the execution environment of the sub-program application being an execution environment of a native application, the native application being a host application of the sub-program application; the first communication interface being a communication interface between a first programming language and a second programming language, the first programming language being a programming language corresponding to the interface rendering instruction, and the second programming language being a programming language corresponding to the native application; and
an interface invoking module, configured to invoke, in the execution environment, a second communication interface based on the interface rendering instruction;
a framework invoking module, configured to invoke the mobile application development framework through the second communication interface, the second communication interface being a communication interface between the second programming language and a third programming language, the third programming language being a development language corresponding to the mobile application development framework;
an interface rendering module, configured to render the interactive interface corresponding to the interactive operation based on the mobile application development framework; and
an interface outputting module, configured to output the interactive interface.

The embodiments of the present disclosure further provide a computer device, including a processor and a memory.

The memory has a computer program stored therein. The computer program, when executed by the processor, causes the processor to perform the method in the embodiments of the present disclosure.

The embodiments of the present disclosure further provide a computer storage medium. The computer storage medium has a computer program stored therein. The computer program includes program instructions. The program instructions, when executed by a processor, perform the method in the embodiments of the present disclosure.

The embodiments of the present disclosure further provide a computer program product, including a computer program. The computer program is stored in a computer-readable storage medium. A processor of a computer device reads the computer program from the computer-readable storage medium. The processor executes the computer program, to cause the computer device to perform the method in the embodiments of the present disclosure.

### BRIEF DESCRIPTION OF THE DRAWINGS

FIG. 1 is a diagram of a network architecture according to some embodiments of the present disclosure.
FIG. 2 is a schematic diagram of a scenario of performing interface rendering for a sub-program application according to some embodiments of the present disclosure.
FIG. 3 is a schematic flowchart of a data processing method according to some embodiments of the present disclosure.
FIG. 4 is a schematic flowchart of generating a structure tree according to some embodiments of the present disclosure.
FIG. 5 is an architectural diagram of cross-language communication according to some embodiments of the present disclosure.
FIG. 6 is a schematic framework diagram of a rendering thread according to some embodiments of the present disclosure.
FIG. 7 is a diagram of a thread architecture of a logic subthread and a rendering subthread according to some embodiments of the present disclosure.
FIG. 8 is a schematic flowchart of logic of rendering a sub-program application according to some embodiments of the present disclosure.
FIG. 9 is a schematic structural diagram of a data processing apparatus according to some embodiments of the present disclosure.
FIG. 10 is a schematic structural diagram of a computer device according to some embodiments of the present disclosure.

### DESCRIPTION OF EMBODIMENTS

The following clearly and completely describes the technical solutions in the embodiments of the present disclosure with reference to the accompanying drawings in the embodiments of the present disclosure. Apparently, the described embodiments are merely some rather than all of the embodiments of the present disclosure. All other embodiments obtained by a person of ordinary skill in the art based on the embodiments of the present disclosure without creative efforts shall fall within the protection scope of the present disclosure.

In existing rendering services for sub-program applications (for example, mini-program applications), adopted rendering engines have problems of a long rendering pipeline and a large memory usage, which not only brings about the problem of inefficient rendering, but also causes the problem that when a smart terminal device displays a display page obtained through rendering, the quality of the presented page still cannot meet quality requirements, that is, the quality is not high enough.

The solutions provided in the embodiments of the present disclosure involve related technical concepts such as a native application and a sub-program application. For ease of understanding, the related technical concepts, such as a native application and a sub-program application, are preferentially described below.

Sub-program application: A sub-program application is an application that can be used without being downloaded and installed. The sub-program application can implement the same function as a native application without being downloaded and installed. The sub-program application can be invoked by another program. After implementing a specific function, the sub-program application automatically returns to the invoking program. Generally, the sub-program application may parasitize another native application for running. When the sub-program application parasitizes a specific native application for running, the native application that is parasitized may be referred to as a host application of the sub-program application. For example, the host application may be, but is not limited to, a social application (such as an instant messaging application) run independently, and the mini-program application may be one of sub-program applications. For example, mini-program applications, such as a shopping application and a real-time dining application, parasitize a native application may all be used as sub-program applications.

Native application: A native application may be a native solution or technology, and may be an application directly run on a current operating system (such as an iOS operating system or an Android operating system). The native application is an application specifically designed for a particular platform or device. For example, the native application may be, but is not limited to, an audio/video application, a social application, a shopping application, or the like run independently. In all embodiments of the present disclosure, mobile application development framework is a library that offers the required fundamental structure to create mobile applications for a specific environment.

As a use range of sub-program applications is increasingly wide, requirements for the sub-program applications are increasingly high. For example, with the continuous development of sub-program applications, users have increasingly high requirements for rendering quality of a display page of a mini-program application, and require that rendering quality of a mini-program application can rival that of a native application. To improve rendering quality of the sub-program applications including mini-program applications, the embodiments of the present disclosure provide a data processing method. Specifically, in the embodiments of the present disclosure including the embodiments of both the claims and the specification (hereinafter referred to as "all embodiments of the present disclosure"), a mobile application development framework may be introduced into a rendering service of a sub-program application, and an interface of the sub-program application is rendered through the mobile application development framework. The mobile application development framework herein may be a Flutter framework. For ease of understanding, the Flutter framework is described below.

Flutter framework: A Flutter framework may be a cross-platform mobile user interface (UI) framework, which can quickly construct a high-quality native UI (because the native UI may be an interface configured for interacting with a user, the native UI may also be referred to as a native interactive interface) on a native operating system (such as an iOS or Android system). A developer may develop a Flutter application (a native application) using the Dart language.

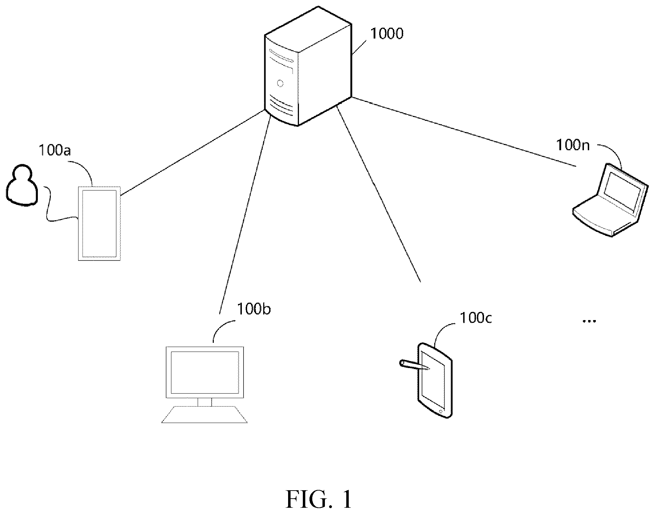

For ease of understanding, reference may be made to FIG. 1. FIG. 1 is a diagram of a network architecture according to some embodiments of the present disclosure. As shown in FIG. 1, the network architecture may include a service server 1000 and a terminal device cluster. The terminal device cluster may include one terminal device or a plurality of terminal devices. A quantity of terminal devices is not limited herein. As shown in FIG. 1, the plurality of terminal devices may include a terminal device 100a, a terminal device 100b, a terminal device 100c, ..., and a terminal device 100n. As shown in FIG. 1, the terminal device 100a, the terminal device 100b, the terminal device 100c, ..., and the terminal device 100n may each establish a network connection to the service server 1000, so that each terminal device can exchange data with the service server 1000 through the network connection.

An application may be installed on all the terminal devices shown in FIG. 1. When the application is run in the terminal devices, the terminal devices can exchange data with the service server 1000 shown in FIG. 1 respectively, so that the service server 1000 can receive service data from each terminal device. The application may include an application having a function of displaying data information such as text, an image, audio, and a video. For example, the application may be a social application, an educational application, a video application, an entertainment application, or the like. The application may be an independent application, and may be installed on a terminal device and run in a current operating system of the terminal device. The application may also be referred to as a native application.

The terminal device in all embodiments of the present disclosure may include: a smart terminal carrying a multimedia data processing function (for example, a video data playback function, a music data playback function, and a text data playback function) such as a smartphone, a tablet computer, a notebook computer, a desktop computer, a smart television, a smart speaker, a desktop computer, a smart watch, a smart in-vehicle terminal, a smart voice interaction device, or a smart home appliance, but is not limited thereto. For example, using the terminal device 100a shown in FIG. 1 as an example, the foregoing application may be integrated on the terminal device 100a. In this case, the terminal device 100a may exchange data with the service server 1000 through the application. In the present disclosure, the service server 1000 may obtain service data according to the applications. For example, the service server 1000 may obtain service data through a bound account of a user. The bound account may be an account bound to the user in an application. A user may log in to an application, upload data, obtain data, and so on through a bound account corresponding to the user, and the service server may also obtain a login state of the user or data uploaded by the user, transmit data to the user, and so on through the bound account of the user.

An application (such as a social application) in the present disclosure may serve as a host application of a specific sub-program application (such as a mini-program application). The sub-program application may parasitize the host application for running. When the sub-program application is run in the host application, the terminal device may exchange data with the service server 1000 through the sub-program application in the host application. In all embodiments of the present disclosure, the service server 1000 may obtain service data according to the applications (the host application and the sub-program application). For example, the service server 1000 may obtain service data through a bound account of a user. The bound account may be an account bound to the user in the host application (or an account bound to the user in the sub-program application). A user may log in to an application, upload data, obtain data, and so on through a bound account corresponding to the user, and the service server may also obtain a login state of the user or data uploaded by the user, transmit data to the user, and so on through the bound account of the user.

When a user performs an interactive operation in the sub-program application, the terminal device may transmit the interactive operation to the service server 1000. In all embodiments of the present disclosure, the service server 1000 may perform interface rendering based on a rendering framework (including the foregoing Flutter framework), to obtain an interactive interface corresponding to the interactive operation, and return the interactive interface to the terminal device. The terminal device may output and display the interactive interface. In some embodiments, the rendering framework may be various architectures that can implement a graphics rendering function. The terminal device may display a graphical user interface of a visualization application (for example, a sub-program application) on a screen through the rendering framework. Specifically, when a user performs an interactive operation in a sub-program application (for example, a start-up operation for the sub-program application or a View details operation for a specific item), the terminal device may generate, in response to the interactive operation for the sub-program application, an interface rendering instruction indicated by the interactive operation. Subsequently, the terminal device may transmit the interface rendering instruction to the service server 1000. The service server 1000 may query what type of framework the rendering framework indicated in the interface rendering instruction is. If the rendering framework indicated by the interface rendering instruction is the foregoing mobile application development framework (for example, the foregoing Flutter framework), the service server may transmit the interface rendering instruction to an execution environment corresponding to the sub-program application (which may be understood as an execution environment of the host application, and the execution environment may be understood as an execution environment of a development programming language of the host application; for example, if the host application is developed by adopting C/C++, the execution environment of the host application may be understood as a C/C++ execution environment, and the execution environment of the sub-program application may also be understood as a C/C++ execution environment) through a first communication interface. The foregoing first communication interface may be understood as a communication interface between a development programming language (which may be referred to as a first programming language) of the sub-program application (such as a mini-program application) and a development programming language (which may be referred to as a second programming language) of the host application. For example, by using an example in which the sub-program application is a mini-program application, if the first programming language for developing the mini-program application is JavaScript, and the second programming language is C/C++, communication may be performed between JavaScript and C/C++ through a JSBinding interface (for example, mutual invocation may be performed between JavaScript and C/C++ through the JSBinding interface). In this case, the JSBinding interface may be used as the foregoing first communication interface.

Further, in the execution environment, a second communication interface may be invoked based on the foregoing interface rendering instruction. The second communication interface may be a communication interface between the development programming language of the host application (which may be referred to as the second programming language) and a development programming language of a mobile application framework (for example, a development programming language of the Flutter framework, which may be referred to as a third programming language). For example, if the second programming language is C/C++ and the third programming language is Dart, communication may be performed between C/C++ and Dart through two interfaces, namely, a native extension interface (Dart API) and a Dart FFI, for communication with native C/C++ (for example, mutual invocation may be performed between Dart and C/C++ through the Dart API or the Dart FFI). In this case, the Dart API or Dart FFI may be used as the second communication interface.

In the execution environment, the mobile application development framework can be invoked through the second communication interface, and the interactive interface corresponding to the interactive operation can be rendered based on the mobile application development framework. Subsequently, the service server 1000 may return the interactive interface to the terminal device, and the terminal device may display the interactive interface (that is, output the interactive interface) in a terminal display interface.

Through the foregoing two interfaces (the first communication interface and the second communication interface), the host application of the sub-program application (such as a mini-program application) may become a communication bridge between the sub-program application and the mobile application development framework, so that the mobile application development framework (the Flutter framework) may be introduced into the sub-program application based on the communication bridge, and rendering can be performed well by using the mobile application development framework in a rendering service of the sub-program application. Because a rendering procedure of the Flutter framework is simple, rendering efficiency of the sub-program application can be improved. In addition, because the Flutter framework has a capability of constructing a native user interface, an interactive interface of a sub-program application obtained through rendering by the Flutter framework has quality the same as that of a native application, and has high quality. Therefore, by introducing the mobile application development framework, in the rendering service of the sub-program application, rendering efficiency can be improved while improving rendering quality.

The method provided in all embodiments of the present disclosure may be performed by a computer device. The computer device includes, but is not limited to, a terminal device or a service server. The service server may be an independent physical server, or may be a server cluster including a plurality of physical servers or a distributed system, or may be a cloud server providing basic cloud computing services, such as a cloud service, a cloud database, cloud computing, a cloud function, cloud storage, a network service, cloud communication, a middleware service, a domain name service, a security service, a content delivery network (CDN), big data, and an artificial intelligence platform.

The terminal device may be connected to the service server directly or indirectly in a wired or wireless communication manner, which is not limited in all embodiments of the present disclosure.

In specific implementations of the present disclosure, user-related data (for example, the bound account of the user and the data uploaded by the user as stated above) involving user information, user data, and the like is obtained and processed only after a permission granted by a user is obtained. To be specific, when all embodiments of the present disclosure are applied to a specific product or technology, a permission or an approval from a user needs to be obtained. In addition, collection, use, and processing of the related data need to comply with relevant laws, regulations, and standards of relevant countries and regions.

In all embodiments of the present disclosure, descriptions related to "B corresponding to A", "B that is corresponding to A", or "B is corresponding to A", and "determining B according to A "may all indicate that A and B are associated. In addition, the determining B according to A does not mean that B is determined according to only A, and B may also be determined according to A and other information.

In some embodiments, the foregoing computer device (for example, the service server 1000, the terminal device 100a, or the terminal device 100b) may be a node in a distributed system. The distributed system may be a blockchain system, and the blockchain system may be a distributed system formed by connecting a plurality of nodes through network communication. A peer-to-peer (P2P) network is formed between the nodes. The P2P protocol is an application-layer protocol running over the Transmission Control Protocol (TCP). A computer device in any form, for example, an electronic device such as a service server or a terminal device, may become a node in the blockchain system by joining the P2P network. For ease of understanding, the concept of the blockchain is described below: The blockchain is a novel application mode of computer technologies, such as distributed data storage, point-to-point transfer, a consensus mechanism, and an encryption algorithm, and is mainly configured to organize data in time order and encrypt the data into a ledger, to prevent the data from being tampered with or forged while verifying, storing, and updating the data. When the computer device is a blockchain node, due to a non-tamperability characteristic and an anti-counterfeiting characteristic of the blockchain, data (for example, data uploaded by a user and an interactive interface obtained through rendering) in the present disclosure is authentic and secure, so that a more reliable result can be obtained after relevant data processing is performed based on the data.

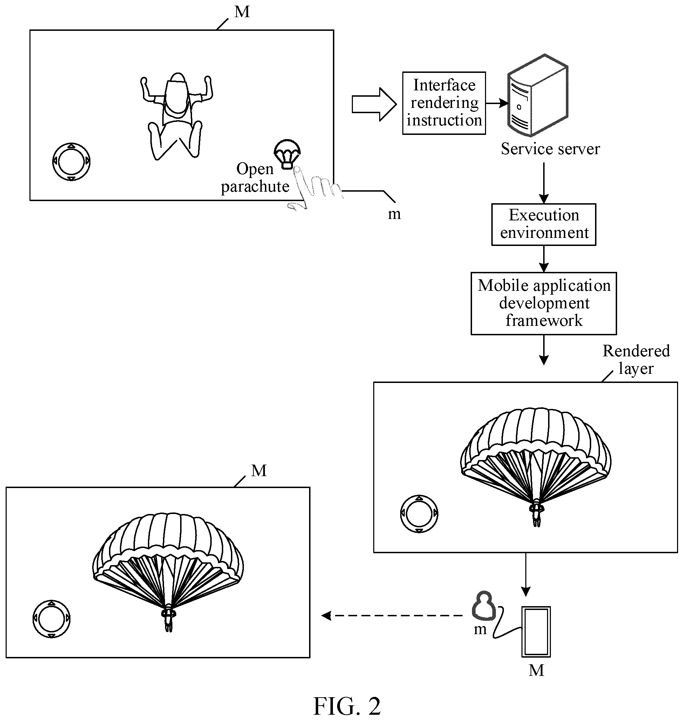

All embodiments of the present disclosure may be applied to various scenarios, including, but not limited to, the cloud technology, artificial intelligence, intelligent transportation, assisted driving, and the like. For ease of understanding, reference may also be made to FIG. 2. FIG. 2 is a schematic diagram of a scenario of performing interface rendering for a sub-program application according to some embodiments of the present disclosure. A service server shown in FIG. 2 may be the foregoing service server 1000, and a terminal device M shown in FIG. 2 may be any terminal device selected from the terminal device cluster in the embodiment corresponding to FIG. 1. For example, the terminal device may be the foregoing terminal device 100b.

This application of the present disclosure is described by using an example in which a sub-program application is a mini-program application. Specifically, in all embodiments of the present disclosure, an example is used, and in the example, a social application (a native application) is a host application of a game application (the game application is a mini-program application), and a user may start and run the game application through the social application. As shown in FIG. 2, after a user m starts a game application, assuming that currently, a player-controlled character of the user m in the game application is in a skydiving state, and a parachute is not opened at present, the user m may click/tap an Open parachute control to open the parachute. When the user m clicks/taps the Open parachute control, the click/tap trigger operation performed by the user m may be understood as an interactive operation. A terminal device M may generate an interface rendering instruction for the interactive operation, and transmit the interface rendering instruction to the service server. Subsequently, after receiving the interface rendering instruction, the service server may also render service data triggered by the Open parachute control, so that a rendered image (a rendered layer) can be obtained as an interactive interface corresponding to the interactive operation.

For example, after the service server receives the interface rendering instruction, if a rendering framework indicated by the interface rendering instruction is a mobile application development framework (a Flutter framework is used herein as an example), the service server may obtain a development programming language (JavaScript is used herein as an example) of the game application and a development programming language (C/C++ is used herein as an example) of the social application, and obtain a communication interface between the two development programming languages. Based on the communication interface, the service server may transmit the interface rendering instruction to an execution environment of the host application. Subsequently, in the execution environment, a development programming language (Dart is used herein as an example) of the Flutter framework may be obtained, and a communication interface between the development programming language of the social application and the development programming language of the Flutter framework is obtained, the Flutter framework may be invoked based on the communication interface. The service data triggered by the Open parachute control may be rendered based on the Flutter framework, to obtain a rendered layer (interactive interface) shown in FIG. 2.

Further, the service server may return the rendered layer to the terminal device, and the terminal device may display the rendered layer (interactive interface) in a terminal display interface. After clicking/tapping the Open parachute control, the user m may view, on a display interface of the terminal device M, the rendered layer that is rendered based on the Flutter framework. As shown in FIG. 2, the parachute of the player-controlled character in the rendered layer is in an open state.

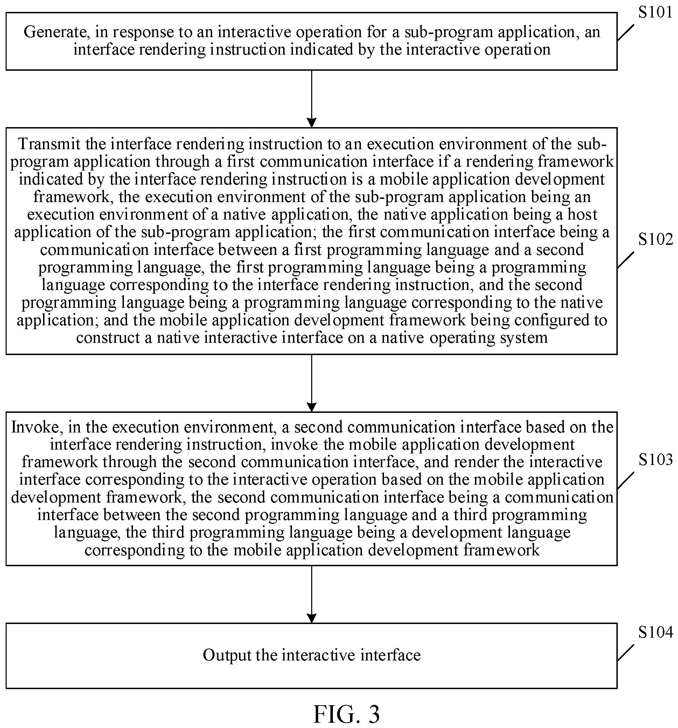

Further, reference may be made to FIG. 3. FIG. 3 is a schematic flowchart of a data processing method according to some embodiments of the present disclosure. The method may be performed by a terminal device (for example, any terminal device, such as the terminal device 100a, in the terminal device cluster shown in FIG. 1) or a service server (for example, the service server 1000 shown in FIG. 1), or may be performed jointly by the terminal device and the service server. For ease of understanding, this embodiment is described by using an example in which the method is performed by the foregoing terminal device. The data processing method may include operations S101 to S104 as follows:

Operation S101: Generate, in response to an interactive operation for a sub-program application, an interface rendering instruction indicated by the interactive operation, the interface rendering instruction being configured for rendering an interactive interface corresponding to the interactive operation.

In all embodiments of the present disclosure, an application may be deployed in the terminal device. The application may be a video application, a social application, an educational application, or the like. When a user uses the terminal device, the user may start the application in the terminal device. For example, the user may click/tap the application and click/tap a start control to run the application. The application may be a native application that can be installed and run in a current operating system of a current terminal device. Different sub-applications may be embedded in the application. The sub-applications do not need to be downloaded and installed, and are all run by relying on the application. In other words, the application is a host application of the sub-applications. In all embodiments of the present disclosure, the sub-application may be referred to as a sub-program application. A user may start the sub-program application in the application and perform a corresponding operation for the sub-program application. In this case, the interactive operation may be any operation (such as a start-up operation, a view operation for a specific item, or a View comments operation) performed by the user in the sub-program application. When the user performs a specific interactive operation for the sub-program application, the terminal device may generate an interface rendering instruction for the interactive operation in response to the interactive operation. For example, a mini-program application may be a type of sub-program application. To be specific, mini-program applications, such as a shopping application and a real-time dining application, may all be referred to as sub-program applications, and can all parasitize the host application for running in the host application.

The interface rendering instruction may include service data for the interactive operation. The service data may specifically include a style shadow structure tree. Specifically, a specific implementation of generating, in response to an interactive operation for a sub-program application, an interface rendering instruction indicated by the interactive operation may be: When a user performs the interactive operation for the sub-program application, the terminal device may obtain a page rendering template file of the sub-program application in response to the interactive operation for the sub-program application. Subsequently, a template parser can be invoked, the page rendering template file can be parsed based on the template parser, and a style shadow structure tree corresponding to the interactive operation can be generated based on a parsing result. The style shadow structure tree is formed by N shadow nodes. Each shadow node includes element encapsulation information of one page element. N is a positive integer. The page element is an element configured for constructing the interactive interface. Then, a rendering instruction including the style shadow structure tree may be generated, and the rendering instruction including the style shadow structure tree may be determined as the interface rendering instruction indicated by the interactive operation.

Using an example in which the sub-program application is a mini-program application, the foregoing page rendering template file may be a template file configured to describe page content of the mini-program application. Specifically, the page rendering template file may be a template file provided in WeiXin Markup Language (WXML) in a rendering procedure of the mini-program application. WXML is a set of markup language for framework design. It can be used with basic components and event systems to construct page structures. In the present disclosure, the template parser may be a component management framework (for example, an Exparser framework) in the mini-program application. Based on the Exparser framework, the page rendering template file may be loaded and parsed, so that the style shadow structure tree corresponding to the interactive operation may be generated based on a parsing result. The style shadow structure tree herein may be a shadow tree. The shadow tree may be specifically understood as a structure tree generated for encapsulation. The shadow tree may enable a component to have its own "shadow" (a hidden form). The "shadow" cannot be arbitrarily accessed in a main document, and a specific role thereof is to hide an internal structure of the component and add a style that is effective only in the component. To be specific, the foregoing style shadow structure tree may be understood to be formed by a plurality of nodes (which may be referred to as shadow nodes). Each node mainly includes hidden encapsulation information of components (for a specific interactive operation, each node may actually also be understood as encapsulation information of page elements in a specific page, so that encapsulation information included in each node may be referred to as element encapsulation information). An interface rendering instruction may be generated based on the style shadow structure tree.

Operation S102: Transmit the interface rendering instruction to an execution environment of the sub-program application through a first communication interface if a rendering framework indicated by the interface rendering instruction is a mobile application development framework, the execution environment of the sub-program application being an execution environment of a native application, the native application being a host application of the sub-program application; the first communication interface being a communication interface between a first programming language and a second programming language, the first programming language being a programming language corresponding to the interface rendering instruction, and the second programming language being a programming language corresponding to the native application; and the mobile application development framework being configured to construct a native interactive interface on a native operating system.

In all embodiments of the present disclosure, for each page of the sub-program application, a developer may specify a rendering framework. Using an example in which the sub-program application is a mini-program application, the rendering framework herein may include a WebView framework and a mobile application development framework (Flutter framework). The interface rendering instruction may include the rendering framework specified by the developer. If the rendering framework is the mobile application development framework, the terminal device may obtain a development programming language (which may be referred to as a first programming language; for example, using a mini-program application as an example, the development programming language may be JacaScript) of the sub-program application and a development programming language (which may be referred to as a second programming language; for example, the development programming language may be C/C++) of the host application. Generally, the first programming language and the second programming language are two different programming languages. Because the sub-program application needs to parasitize the host application for running, the first programming language and the second programming language may be languages that can communicate. To be specific, when the first programming language is different from the second programming language, there is a communication interface between the first programming language and the second programming language for communication. Using an example in which the first programming language is JacaScript and the second programming language is C/C++, JacaScript can communicate with C/C++ through the JSBinding mechanism, and in this case, the first communication interface may be determined as JSBinding. Certainly, when the first programming language and the second programming language are other languages, the first communication interface may be determined according to a situation of a specific scenario. An example is used herein only for description.

The terminal device may obtain a first communication interface between the first programming language and the second programming language, and transmit the interface rendering instruction to the execution environment of the sub-program application based on the first communication interface. Since the sub-program application parasitizes the host application for running, an execution environment of the sub-program application may be understood as an execution environment of the host application. Specifically, the execution environment of the host application may be an execution environment of a development programming language (for example, the execution environment of the foregoing second programming language). Based on the foregoing first communication interface, even if a development programming language of the sub-program application is different from a development programming language of the host application, the interface rendering instruction can still be transmitted to the execution environment of the sub-program application based on the foregoing first communication interface. The execution environment may include an underlying rendering framework of the sub-program application (such as a mini-program application). In this case, in the execution environment, interface rendering of the sub-program application can be performed.

Operation S103: Invoke, in the execution environment, a second communication interface based on the interface rendering instruction, invoke the mobile application development framework through the second communication interface, and render the interactive interface corresponding to the interactive operation based on the mobile application development framework, the second communication interface being a communication interface between the second programming language and a third programming language, the third programming language being a development language corresponding to the mobile application development framework.

In all embodiments of the present disclosure, in the execution environment, the second communication interface can be invoked based on the interface rendering instruction, the mobile application development framework is invoked through the second communication interface, and interface rendering can be performed based on the mobile application development framework. Specifically, in all embodiments of the present disclosure, after rendering data corresponding to the interactive operation is generated based on the interface rendering instruction, the mobile application development framework can be further invoked to render the rendering data. The rendering data herein may be specifically a page element structure tree. Specifically, before the second communication interface is invoked, in all embodiments of the present disclosure, in the execution environment, a page element structure tree corresponding to the interactive operation can be created based on the interface rendering instruction. The page element structure tree is formed by N element nodes, one element node corresponding to one page element. Each element node includes element description data. One piece of element description data is style description data of one page element. The page element is an element configured for constructing the interactive interface. In response to that creation of the page element structure tree is completed, the operation of invoking, in the execution environment, a second communication interface based on the interface rendering instruction can be performed.

The foregoing element description data may be style description data of page elements. A page may be formed by using the page elements. Specifically, the element description data may be a widget. Each widget may be understood as a basic module configured to form a UI. By combining and assembling the widgets, various complex interfaces can be formed. However, in the Flutter framework, construction of the UI can be completed very simply by using various combinations of widgets. Therefore, in all embodiments of the present disclosure, corresponding style description data may be determined for each page element based on the interface rendering instruction. One piece of style description data can correspond to one node (which may be referred to as an element node). The foregoing page element structure tree can be constructed according to the element nodes (in this case, the page element structure tree may be understood as a widget tree). When the page element structure tree is successfully created, the second communication interface can be invoked, a mobile application development framework is invoked based on the second communication interface, and then, the page element structure tree is rendered based on the mobile application development framework.

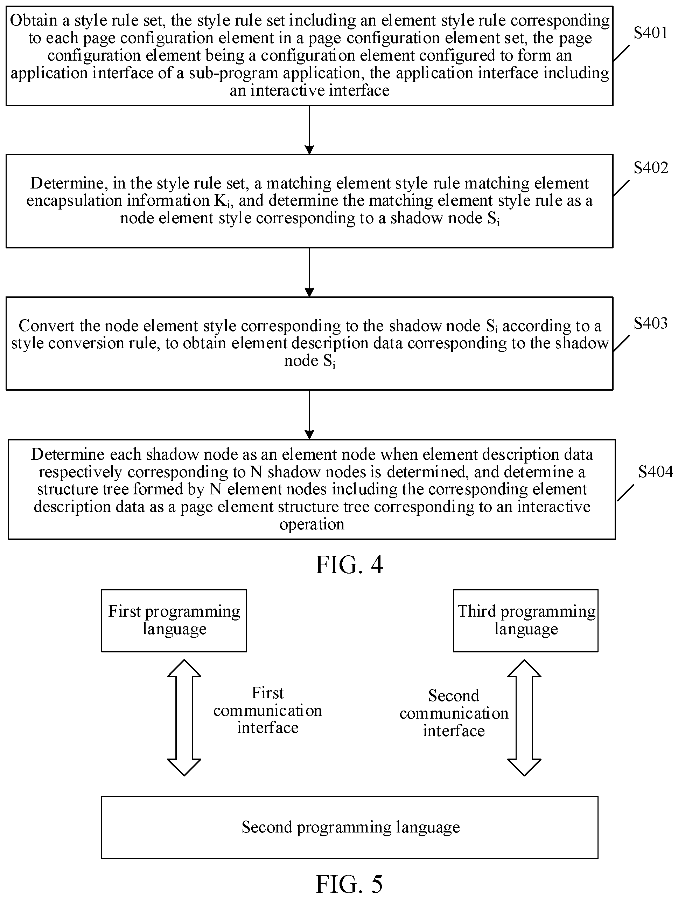

It can be learned from the above that, the interface rendering instruction includes a style shadow structure tree (the style shadow structure tree is formed by N shadow nodes, each shadow node including element encapsulation information of one page element) corresponding to the interactive operation. Moreover, in all embodiments of the present disclosure, a page element structure tree can actually be generated based on the style shadow structure tree (information in each shadow node may be converted, to obtain one piece of element description data, thereby obtaining one element node including the element description data, so that a page element structure tree constructed from element nodes may be formed). Specifically, for a specific implementation of generating the page element structure tree based on the style shadow structure tree, reference may be made to subsequent descriptions in some embodiments corresponding to FIG. 4.

Further, after the page element structure tree is generated, in the execution environment, the mobile application development framework can be invoked through the second communication interface, and the interactive interface corresponding to the interactive operation can be rendered based on the mobile application development framework and the page element structure tree. Using an example in which the element node of the page element structure tree includes an element node *Sᵢ*, a specific implementation process of the example may include: A program object corresponding to the element node *Sᵢ* can be created in an isolated running environment of the third programming language based on the second communication interface. A mounting operation can be performed on element description data corresponding to the element node *Sᵢ* based on the program object corresponding to the element node *Sᵢ*, to obtain a mounted object corresponding to the element node *Sᵢ.* When mounted objects respectively corresponding to the N element nodes are determined, a structure tree formed by the N element nodes including the corresponding mounted objects can be determined as an element mounting structure tree corresponding to the interactive operation. The element mounting structure tree can be rendered based on the mobile application development framework, to obtain the interactive interface.

The mounting operation herein may be specifically a Mount operation. In logic implementation of rendering, for each element node, a corresponding program object may be created in the isolated running environment of the third programming language through the second communication interface (using an example in which the third programming language is Dart, a corresponding Dart object may be created in an isolated memory, namely, Dart Isolate; the Dart object may be referred to as a program object corresponding to the node). The program object may be owned by a widget (element description data) object corresponding to the element node. This process may be understood as mounting. That is, a mounting operation is performed on element description data based on the program object, so that a mounted object corresponding to each element node can be obtained. Further, an element mounting structure tree (widget tree mount) including nodes of the mounted objects can be obtained. The element mounting structure tree may be rendered based on the mobile application development framework, to obtain the interactive interface.

A specific implementation of rendering the element mounting structure tree based on the mobile application development framework, to obtain the interactive interface, may be: Interface layout processing can be performed on the element mounting structure tree based on the mobile application development framework, to obtain interactive interface layout information of the interactive interface. Subsequently, interface painting can be performed according to the interactive interface layout information, to obtain a painted interface, and then, the painted interface can be determined as the interactive interface.

Operation S104: Output the interactive interface.

In all embodiments of the present disclosure, for the foregoing interactive interface, if the interactive interface is an interface that has not been rasterized, to further improve quality of the interface, the interactive interface may be rasterized, to obtain a rasterized interface, and then the rasterized interface is outputted. However, if the interactive interface is a rasterized interface, the interactive interface may be directly outputted.

In all embodiments of the present disclosure, in an interface rendering service of a sub-program application (such as a mini-program application), a mobile application development framework is introduced. Specifically, for an interactive operation for the sub-program application, an interface rendering instruction indicated by the interactive operation may be generated in response to the interactive operation. The interface rendering instruction may be transmitted to an execution environment of the sub-program application through the first communication interface if a rendering framework indicated by the interface rendering instruction is the foregoing mobile application development framework. The sub-program application is an application parasitizing another native application (an application developed based on a second programming language, the native application corresponding to the second programming language; the native application may be referred to as a host application) for running. In this case, an execution environment of the sub-program application may actually be understood as an execution environment of the host application. A programming language corresponding to the interface rendering instruction is a first programming language. If it is expected to perform communication between the two languages, communication may be performed through the first communication interface. Subsequently, in the execution environment, a second communication interface can be invoked based on the interface rendering instruction, the mobile application development framework can be invoked through the second communication interface, and the interactive interface corresponding to the interactive operation can be rendered based on the mobile application development framework. Because the mobile application development framework is a framework developed based on the third programming language, to invoke the mobile application development framework, communication may be performed between the second programming language and the third programming language based on the second communication interface. Therefore, through the first communication interface and the second communication interface, the execution environment of the native application may be referred to as a communication bridge, which can enable communication between the first programming language and the second programming language, so that the sub-program application developed based on the first programming language can effectively invoke the mobile application development framework. The mobile application development framework is a framework configured for constructing a native interactive interface on a native operating system, and features a simple rendering procedure, thereby having efficient rendering performance. In addition, an interface rendered through the mobile application development framework can rival a native interface and has high rendering quality. Therefore, in the present disclosure, after the mobile application development framework is introduced into an interface rendering service of a sub-program application, display quality close to that of the native interface can be provided for an interactive interface of the sub-program application through the efficient rendering performance of the mobile application development framework. Rendering quality can be improved while improving rendering efficiency in the interface rendering service of the sub-program application.

Further, reference may be made to FIG. 4. FIG. 4 is a schematic flowchart of generating a structure tree according to some embodiments of the present disclosure. The procedure may correspond to the procedure of generating a page element structure tree in the embodiment corresponding to FIG. 3. The page element structure tree may be specifically generated based on a style shadow structure tree (the style shadow structure tree is formed by N shadow nodes, each shadow node including element encapsulation information of one page element) in the interface rendering instruction. A specific implementation of generating the page element structure tree is described herein by using an example in which the N shadow nodes of the style shadow structure tree include a shadow node *Sᵢ*, and element encapsulation information included in the shadow node *Sᵢ* is element encapsulation information *Kᵢ* (N and i both being positive integers). As shown in FIG. 4, the procedure may include at least operation S401 to operation S404 as follows:

Operation S401: Obtain a style rule set, the style rule set including an element style rule corresponding to each page configuration element, the page configuration element being a configuration element configured to form an application interface of the sub-program application, the application interface including the interactive interface.

Specifically, the style rule set may be a set for specifying an element style of an application interface of a sub-program application (such as a mini-program application), and includes an element style rule of each page configuration element of the application interface. The element style rule may be formed by a selector, an attribute, and a value, and may specifically include a type of the selector, an identification (ID), a class, a background color, a font attribute, an outline, a border, and the like. The page configuration element may be elements (for example, a title, an image, and text) configured to form a page. The style rule set may be specifically RuleSet. RuleSet may be generated based on a page style sheet. To be specific, a specific implementation of obtaining a style rule set may be: A page style configuration table can be obtained. The page style configuration table may include attribute definition information of each page configuration element. Subsequently, a style parser can be invoked, the attribute definition information included in the page style configuration table can be parsed based on the style parser, and the style rule set can be generated based on a parsing result. Using an example in which the sub-program application is a mini-program application, the style parser herein may be included in a mini-program basic library, and may be specifically a component dedicated to parsing a page style sheet to generate RuleSet. Based on the style parser, the page style configuration table can be automatically parsed to obtain RuleSet. The page style configuration table herein may also be referred to as a page style sheet. In a rendering service, the page style sheet is a markup language configured for controlling a page style and allowing separation of style information from page content. The style is a format, and may be specifically a size and color of text, a position of an image, and the like in a page, which are all a style of setting page content. In the present disclosure, a file defining a page style may be established. The file may be used as the page style configuration table. The page style configuration table can be directly introduced (or inserted) into a rendering service of the mini-program application. The style parser can parse the page style configuration table, so that the style rule set can be generated.

Operation S402: Determine, in the style rule set, an element style rule matching the element encapsulation information *Kᵢ,* and determine the matching element style rule as a node element style corresponding to the shadow node *Sᵢ*.

Specifically, for the shadow nodes *Sᵢ*, in all embodiments of the present disclosure, a matching element style rule can be selected from the style rule set based on the element encapsulation information *Kᵢ*. In all embodiments of the present disclosure, the matching element style rule may be specifically selected from RuleSet according to information, such as a tag, an ID, and a class, of the shadow node. For example, using an example in which the matching element style rule is selected based on the class, assuming that the class in the element encapsulation information of the shadow node is "into", an element style rule whose class is "into" can be found through query in RuleSet, and the element style rule can be used as the matching element style rule. Using an example in which the element encapsulation information *Kᵢ* includes node class information of the shadow node *Sᵢ*, an element style rule corresponding to each page configuration element included in the style rule set includes configuration class information, a specific implementation of determining, in the style rule set, an element style rule matching the element encapsulation information *Kᵢ* may be: In configuration class information included in element style rules in the style rule set, configuration class information matching the node class information of the shadow node *Sᵢ* can be determined as matching configuration class information. Subsequently, an element style rule corresponding to the matching configuration class information in the style rule set can be determined as a candidate element style rule of the shadow node *Sᵢ.* The element style rule matching the element encapsulation information *Kᵢ* can be determined according to the candidate element style rule. The node class information and the configuration class information herein may each be a field that is based on a specific programming language and that is configured to indicate a class. Based on the field, a class to which the shadow node belongs may be clarified, or a class to which the style rule belongs may be clarified. Certainly, a manner of performing style rule matching based on the node class information is described herein by using merely an example. Actually, specific scenarios may correspond to different matching manners. For example, for a style matching manner, style matching may also be performed in RuleSet according to information such as a tag, an ID, and a class of a node (for example, matching is performed according to all the tag, the ID, and the class), which is not limited in the present disclosure.

Further, using an example in which at least two candidate element style rules are provided, and the at least two candidate element style rules include a candidate element style rule *Cⱼ* (j is a positive integer), a specific implementation of determining, according to the candidate element style rules, a matching element style rule matching the element encapsulation information *Kᵢ* may be: A style priority attribute *Dⱼ* corresponding to the candidate element style rule *Cⱼ* can be obtained. A priority weight corresponding to the candidate element style rule *Cⱼ* can be determined according to the style priority attribute *Dⱼ.* When priority weights respectively corresponding to the at least two candidate element style rules are determined, a candidate element style rule corresponding to a maximum priority weight in the at least two priority weights as the element style rule matching the element encapsulation information *Kᵢ*.

Using an example in which the style priority attribute *Dⱼ* includes a value attribute and a rarity attribute, the determining a priority weight corresponding to the candidate element style rule *Cⱼ* according to the style priority attribute *Dⱼ* may be: A rarity value corresponding to the rarity attribute can be obtained. If the value attribute is a value-valid attribute and the rarity value is greater than a rarity threshold, a first weight value matching the rarity value in a first weight range may be determined as the priority weight corresponding to the candidate element style rule *Cⱼ.* If the value attribute is the value-valid attribute and the rarity value is less than the rarity threshold, a second weight value matching the rarity value in a second weight range may be determined as the priority weight corresponding to the candidate element style rule *Cⱼ.* A weight value in the second weight range is less than a weight value in the first weight range. If the value attribute is a value-invalid attribute and the rarity value is greater than the rarity threshold, a third weight value matching the rarity value in a third weight range may be determined as the priority weight corresponding to the candidate element style rule *Cⱼ.* A weight value in the third weight range is less than a weight value in the second weight range. If the value attribute is the value-invalid attribute and the rarity value is less than the rarity threshold, a fourth weight value matching the rarity value in a fourth weight range may be determined as the priority weight corresponding to the candidate element style rule *Cⱼ.* A weight value in the fourth weight range is less than a weight value in the third weight range.

After the style shadow structure tree is constructed, a candidate element style rule can be obtained by performing style matching in the style rule set according to information, such as a tag, an ID, and a class, of each shadow node. Subsequently, if at least two candidate element style rules are provided, a corresponding priority weight corresponding to each candidate element style rule can be determined according to a style priority attribute corresponding to the candidate element style rule. A style with a highest weight can be applied to the shadow node. Each candidate element style rule includes an attribute parameter (for example, a position attribute and an order attribute) of a style. The style priority attribute herein may be an attribute parameter configured for determining a style priority in a definition attribute parameter included in the candidate element style rule, and may be a style definition position attribute (inline style/wxss), an order attribute, a value attribute (which may include a value-valid attribute and a value-invalid attribute, or may be understood as an importance attribute, that is, whether the style is important; if the style is an important attribute, the value attribute may be the value-valid attribute; and if the style is a non-important attribute, the value attribute may be the value-invalid attribute), a specificity attribute (which may be a specificity attribute of a selector included in the style rule; for each style rule, specificity of a selector is calculated, so that an element attribute statement can be correctly displayed in a case of a conflict), and the like. A priority weight of each candidate element style rule can be determined according to one or more of the style definition position attribute, the order attribute, the value attribute, or the specificity attribute.

Because specificity may be configured for determining whether a style rule is special or not (whether the style rule is rare), the specificity attribute may be referred to as a rarity attribute herein. Using an example in which the priority weight is determined according to both the value attribute and the rarity attribute, a style priority attribute *Dⱼ* may include the value attribute and the rarity attribute. In the present disclosure, a rarity value corresponding to the rarity attribute can be obtained. A larger rarity value indicates a larger priority weight corresponding to the candidate element style rule. Certainly, the priority weight corresponding to the candidate element style rule is determined based on both the value attribute and the rarity value. Therefore, when the value attribute is a value-valid attribute, a larger rarity value indicates a larger priority weight. When the rarity value is greater than a rarity threshold, a weight value matching the rarity value in a first weight range may be determined as the priority weight corresponding to the candidate element style rule *Cⱼ.* When the rarity value is less than the rarity threshold, the current priority weight needs to be less than that in the foregoing case. Therefore, a weight value matching the rarity value in a second weight range (a weight value in the second weight range is less than a weight value in the first weight range) may be determined as the priority weight corresponding to the candidate element style rule *Cⱼ.* Similarly, when the value attribute is a value-invalid attribute, and the rarity value is greater than the rarity threshold, the current priority weight needs to be less than that in the second case, and a weight value matching the rarity value in a third weight range (a weight value in the third weight range is less than a weight value in the second weight range) may be determined as the priority weight corresponding to the candidate element style rule *Cⱼ.* When the rarity value is less than the rarity threshold, the current priority weight needs to be less than that in the third case, and a weight value matching the rarity value in a fourth weight range (a weight value in the fourth weight range is less than a weight value in the third weight range) may be determined as the priority weight corresponding to the candidate element style rule *Cⱼ.*

Further, a candidate element style rule corresponding to a maximum priority weight may be determined as the matching element style rule of the shadow node. After matching element style rules of all shadow nodes are determined, the matching element style rules may be determined as node element styles of the shadow nodes.

Operation S403: Convert the node element style corresponding to the shadow node *Sᵢ* according to a style conversion rule, to obtain element description data corresponding to the shadow node *Sᵢ*.

Specifically, the node element style corresponding to the shadow node *Sᵢ* may be converted according to a style conversion rule (or referred to as a style conversion standard), to obtain element description data corresponding to the shadow node *Sᵢ*. In the same manner, element description data respectively corresponding to each shadow node can be obtained. Specifically, it can be learned from the foregoing that, the element description data herein may be configuration data configured to describe one page element. The element description data may be specifically a widget corresponding to each node element style. There is a corresponding conversion standard between the node element style and the widget. Based on the conversion standard, a style may be converted into a corresponding widget, or a widget may be converted into a corresponding style. Therefore, in all embodiments of the present disclosure, the style conversion rule (or referred to as a style conversion standard) may be obtained, and a matching element style rule of each shadow node can be converted based on the style conversion rule, to generate a corresponding widget (namely, the element description data).

Operation S404: Determine each shadow node as an element node when element description data respectively corresponding to the N shadow nodes is determined, and determine a structure tree formed by N element nodes including the corresponding element description data as the page element structure tree corresponding to the interactive operation.

Specifically, when element description data respectively corresponding to the N shadow nodes is determined, each shadow node may be determined as an element node, and a structure tree formed by the N element nodes including the corresponding element description data is determined as the page element structure tree (widget tree).

In all embodiments of the present disclosure, through the foregoing two interfaces (the first communication interface and the second communication interface), the host application of the sub-program application (such as a mini-program application) may become a communication bridge between the sub-program application and the mobile application development framework, so that the mobile application development framework (the Flutter framework) may be introduced into the sub-program application based on the communication bridge, and rendering can be performed well by using the mobile application development framework in a rendering service of the sub-program application. Because a rendering procedure of the Flutter framework is simple, rendering efficiency of the sub-program application can be improved. In addition, because the Flutter framework has a capability of constructing a native user interface, an interactive interface of a sub-program application obtained through rendering by the Flutter framework has quality the same as that of a native application, and has high quality. Therefore, by introducing the mobile application development framework, in the rendering service of the sub-program application, rendering efficiency can be improved while improving rendering quality.

Further, for ease of understanding, reference may be made to FIG. 5. FIG. 5 is an architectural diagram of cross-language communication according to some embodiments of the present disclosure. The architecture may be specifically a cross-language communication architecture between a first programming language and a third programming language.

The first programming language may be a development programming language of a sub-program application (for example, a mini-program application). The development programming language may be any programming language having an application development function, for example, JavaScript, C/C++, or Python. Generally, for a mini-program application, a development programming language of the mini-program application is usually JavaScript. An interface layer of the mini-program application is also written using JavaScript. The second programming language may be a development programming language of a host application (a native application) of the sub-program application. The development programming language may be any programming language having an application development function, for example, JavaScript, C/C++, or Python. In all embodiments of the present disclosure, the second programming language may be specifically C/C++. The third programming language may be a development programming language of the foregoing mobile application development framework. In all embodiments of the present disclosure, the mobile application development framework may be specifically the Flutter framework. The Flutter framework is written in the Dart language. Therefore, the third programming language may be specifically the Dart language.

The first communication interface in all embodiments of the present disclosure may be a communication interface between the first programming language and the second programming language. For example, the first communication interface may be specifically a communication interface (such as the JSBinding mechanism) between JavaScript and C/C++. The second communication interface may be a communication interface between the second programming language and the third programming language. For example, the second communication interface may be specifically a communication interface (such as the Dart API or the Dart FFI; because the Dart FFI has better performance, the Dart FFI may be preferentially used as the second communication interface) between Dart and C/C++. By using the second programming language as a communication bridge, communication between the first programming language and the third programming language can be implemented. That is, the Flutter framework can be effectively introduced into the sub-program application.

It can be learned from the foregoing that, in all embodiments of the present disclosure, the mobile application development framework may be introduced for rendering an interface of the sub-program application. Certainly, in all embodiments of the present disclosure, the interface of the sub-program application (such as a mini-program application) may also be rendered based on the remaining rendering frameworks (such as a page view framework, namely, a WebView framework) at the same time. For the same interface rendering instruction, in all embodiments of the present disclosure, rendering may be performed simultaneously based on the mobile application development framework and the WebView framework respectively. If the rendering is first completed based on the mobile application development framework, a rendered image obtained based on the mobile application development framework may be outputted and displayed. If the rendering is first completed based on the WebView framework, a rendered image obtained based on the WebView framework may be outputted and displayed. In this way, response efficiency of the sub-program application can be improved well while ensuring rendering quality.

In a rendering procedure based on the WebView framework, the sub-program application (such as a mini-program application) is based on a dual-thread model in which a logic layer (AppService) and a view layer (WebView) are separated. Operations, such as creation of JS logic (background program logic; using an example in which the sub-program application is developed by adopting JavaScript, background program logic in the example may be JS logic) and a DOM tree (which may be understood as a shadow tree), parsing of a page style sheet, style matching, Layout, and Paint, all occur in a main thread. The main thread has excessive tasks and insufficient parallelism, resulting in low efficiency. Moreover, because the JS tasks consume too much time, an interface stutters. In addition, the separate threads need to communicate frequently through the JSBridge, and it is necessary to synchronize states and maintain a tree structure between the two threads, which consume a lot of communication costs.

To reduce the foregoing problems and improve the smoothness of the interface, in all embodiments of the present disclosure, a novel thread (which may be specifically referred to as a rendering thread) is created in the rendering framework of the sub-program application (such as a mini-program application). In all embodiments of the present disclosure, a view (wxml) and logic (JS logic) may be run on the logic layer (AppService) at the same time. Moreover, in terms of internal implementation, Layout and rendering of the view may occur in the novel thread. By splitting a part of logic (such as Layout and rendering) and the like into the novel thread, a multi-core CPU of the device can be fully utilized, thereby improving parallelism, improving smoothness of interface rendering and interaction, and reducing time consumption of rendering and a delay.

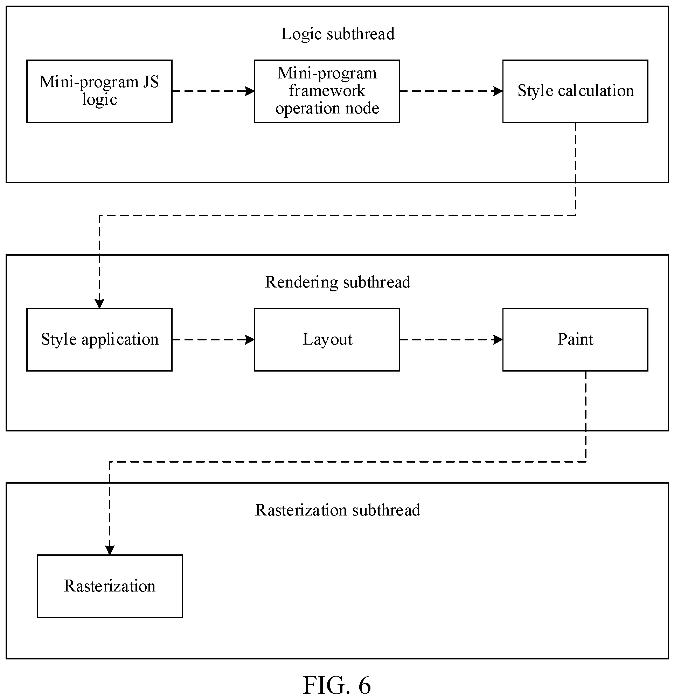

For ease of understanding, reference may also be made to FIG. 6. FIG. 6 is a schematic framework diagram of a rendering thread according to some embodiments of the present disclosure. The framework shown in FIG. 6 may be a schematic diagram of describing a framework of a rendering thread of a sub-program application by using an example in which the sub-program application is a mini-program application. As shown in FIG. 6, a rendering framework for the mini-program application may be generally divided into a logic subthread (AppService subthread), an interface rendering subthread, and a rasterization subthread (Raster subthread). For ease of understanding, the following describes the subthreads in detail.

Logic subthread: In the logic subthread, logic, such as mini-program JS logic, a mini-program framework operation node, style calculation, and the like, may be executed. The mini-program JS logic may specifically include an operation of creating a shadow tree and generating an interface rendering instruction. The mini-program framework operation node may specifically include an operation of generating RuleSet and parsing the foregoing shadow tree after the interface rendering instruction is received in an execution environment. The style calculation may specifically include operations of performing style matching for each node of the shadow tree in the execution environment, and calculating a matching style rule of each node.

Rendering subthread: The rendering subthread may include logic such as style application, Layout, and Paint. For the matching style rule of each node matched in the foregoing logic subthread, the matching style rule may be applied to the rendering subthread, and a widget corresponding to the style may be generated, to obtain a widget tree. Subsequently, after a Mount operation is performed on the widget tree node by node, the widget tree may be transferred to the Flutter framework for layout and painting processing thereon, to generate a painted interface.

Rasterization subthread: The painted interface obtained through painting by the Flutter framework is submitted to the rasterization subthread for rasterization, and a finally obtained rasterized interface may be used for display by the terminal device.

For specific implementations of the operations in the subthreads, reference may be made to the descriptions in all embodiments corresponding to FIG. 3 and FIG. 4, and details are not described herein again.

It can be learned from the above that, a total rendering thread of the sub-program application (such as a mini-program application) includes a development logic subthread (AppService subthread) and an interface rendering subthread (rendering subthread), and the operation of generating an interface rendering instruction indicated by the interactive operation and the operation of creating, in the execution environment, a page element structure tree (widget tree) corresponding to the interactive operation based on the interface rendering instruction can both be performed in the development logic subthread. The operation of invoking, in the execution environment, a second communication interface based on the interface rendering instruction, invoking the mobile application development framework through the second communication interface, and rendering the interactive interface corresponding to the interactive operation based on the mobile application development framework (which may specifically include a mounting operation (style application), Layout, and Paint) may be performed in the interface rendering subthread.

In all embodiments of the present disclosure, by splitting a part of logic (such as Layout and Paint) into the rendering subthread for execution, a multi-core CPU of the device can be fully utilized, thereby improving parallelism and improving smoothness of interface rendering and interaction. In addition, rendering is performed by using a single-thread model rather than a separate dual-thread model, to reduce a communication loss caused by frequent communication, so that stability of a tree structure can be well maintained, thereby reducing time consumption of rendering and a delay while ensuring security management and control.

Based on the logic subthread and the rendering subthread, to improve security, in the present disclosure, a basic library (a basic library of the mini-program application) and a built-in component that are originally run on the WebView side may both be run in a new subdomain in the logic subthread, and therefore, can be isolated from a program of a developer, thereby improving security.

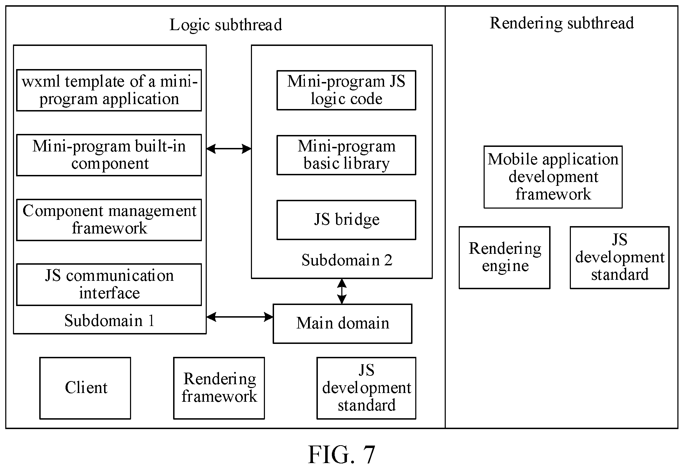

For ease of understanding, reference may also be made to FIG. 7. FIG. 7 is a diagram of a thread architecture of a logic subthread and a rendering subthread according to some embodiments of the present disclosure. The thread architecture shown in FIG. 7 is a thread architecture using an example in which a sub-program application is a mini-program application. As shown in FIG. 7, the logic subthread may include a subdomain 1, a subdomain 2, a main domain, a client, a rendering framework, and a JS development standard (a JS VM, which may provide a JSBinding interface; using an example in which a development programming language of the mini-program application is JavaScript, a development standard herein may be the JS development standard; when the development programming language of the mini-program application is another programming language, the development standard may be a development standard corresponding thereto). The subdomain 1 may specifically include a wxml template of the mini-program application, a mini-program built-in component, a component management framework (such as Exparser), and a JS communication interface (such as the foregoing JSBinding interface). The subdomain 2 may specifically include mini-program JS logic code, a mini-program basic library, and a JS bridge (such as the JS Bridge). Any two of the subdomain 1, the subdomain 2, and the main domain may communicate with each other. A client in the logic subthread may be specifically a host application, and the rendering framework may be a novel rendering framework (a rendering framework that performs rendering based on a mobile application development framework) provided in the present disclosure. In all embodiments of the present disclosure, a basic library (a basic library of the mini-program application) and a built-in component that are originally run on the WebView side may both be run in a new subdomain in the logic subthread, and therefore, can be isolated from a program of a developer, thereby improving security.

The rendering subthread is actually a UI subthread, and the UI subthread may include a mobile application development framework, a rendering engine, and a JS development standard. Rendering data (for example, a structure tree after being mounted) obtained in the logic subthread may be submitted to the rendering subthread, and the rendering subthread may render the rendering data based on the rendering engine.

In all embodiments of the present disclosure, by splitting a part of logic (such as Layout and Paint) into the rendering subthread for execution, a multi-core CPU of the device can be fully utilized, thereby improving parallelism and improving smoothness of interface rendering and interaction. In addition, rendering is performed by using a single-thread model rather than a separate dual-thread model, to reduce a communication loss caused by frequent communication, so that stability of a tree structure can be well maintained, thereby reducing time consumption of rendering and a delay while ensuring security management and control.

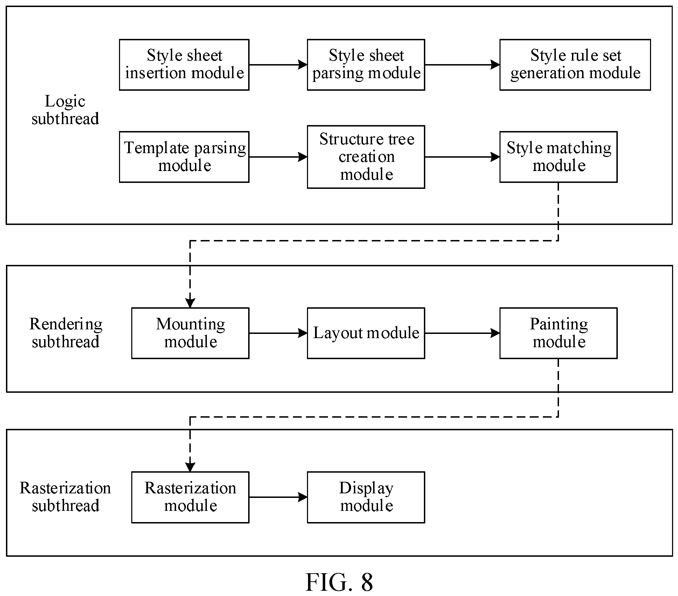

Further, for ease of understanding, reference may also be made to FIG. 8. FIG. 8 is a schematic flowchart of logic of rendering a sub-program application according to some embodiments of the present disclosure. A logic procedure of rendering shown in FIG. 8 may be a logic procedure described by using an example in which a sub-program application is a mini-program application. As shown in FIG. 8, a rendering architecture of the mini-program application may mainly include a logic subthread (AppService subthread), a rendering subthread, and a rasterization subthread. The logic subthread may include a style sheet insertion module, a style sheet parsing module, a style rule set generation module, a template parsing module, a structure tree creation module, and a style matching module. The rendering subthread may include a mounting module, a layout module, and a painting module. The rasterization subthread may include a rasterization module and a display module. For ease of understanding, the following describes the modules in detail.

For the logic subthread, after an interface rendering instruction is received, an Exparser framework in the template parsing module may load and parse a page rendering template file, and transmit a parsing result to the structure tree creation module. The structure tree creation module may create a style shadow structure tree (shadow tree) based on the parsing result. In addition, the style sheet insertion module in the logic subthread may insert a page style sheet, and the style sheet parsing module may parse the page style sheet, and transmit a parsing result to the style rule set generation module. In the style rule set generation module, a style rule set (such as RuleSet) may be generated based on the parsing result. Further, in the style matching module in the logic subthread, traversal (such as pre-order traversal) may be performed on shadow nodes in the shadow tree, so that each shadow node may enter a parsing procedure (an inflate procedure) and a style re-calculation procedure (a RecalcStyle procedure). In the RecalcStyle procedure, style matching may be performed in RuleSet according to information, such as a tag, an ID, and a class, of the shadow node. A matched style may be used as a candidate element style rule. A priority weight may be determined for the matched style according to information such as a style definition position, an order, importance, and specificity. A candidate style with a high weight may be applied to the node. Subsequently, in the style matching module, a widget corresponding to a style of each node may be generated, so that a widget tree (a page element structure tree) can be obtained.

For the rendering subthread, the generated widget tree is submitted to the rendering subthread. The mounting module in the rendering subthread may perform traversal (such as post-order traversal) on all nodes in the widget tree, and perform a Mount operation on the nodes one by one through the traversal (for example, a corresponding Dart object may be created in Dart Isolate through a Dart FFI interface and is held by the widget). An element mounting structure tree may be generated by performing a Mount operation. Then, the element mounting structure tree may be submitted to a layout module, and layout processing may be performed on the element mounting structure tree based on the Flutter framework in the layout module. In the painting module, painting may be performed on the element mounting structure tree based on the Flutter framework.

For the rasterization subthread, an image obtained through the foregoing painting may be submitted to the rasterization subthread. The rasterization module may perform rasterization on the image to obtain a rasterized interface, and then, transmit the image to the display module. The display module can output and display the rasterized interface.

In all embodiments of the present disclosure, through the first communication interface and the second communication interface, the host application of the sub-program application (such as a mini-program application) may become a communication bridge between the sub-program application and the mobile application development framework, so that the mobile application development framework (the Flutter framework) may be introduced into the sub-program application based on the communication bridge, and rendering can be performed well by using the mobile application development framework in a rendering service of the sub-program application. Because a rendering procedure of the Flutter framework is simple, rendering efficiency of the sub-program application can be improved. In addition, because the Flutter framework has a capability of constructing a native user interface, an interactive interface of a sub-program application obtained through rendering by the Flutter framework has quality the same as that of a native application, and has high quality. Therefore, by introducing the mobile application development framework, in the rendering service of the sub-program application, rendering efficiency can be improved while improving rendering quality. By splitting a part of logic (such as Layout and Paint) into the rendering subthread for execution, a multi-core CPU of the device can be fully utilized, thereby improving parallelism and improving smoothness of interface rendering and interaction. In addition, rendering is performed by using a single-thread model rather than a separate dual-thread model, to reduce a communication loss caused by frequent communication, so that stability of a tree structure can be well maintained, thereby reducing time consumption of rendering and a delay while ensuring security management and control.

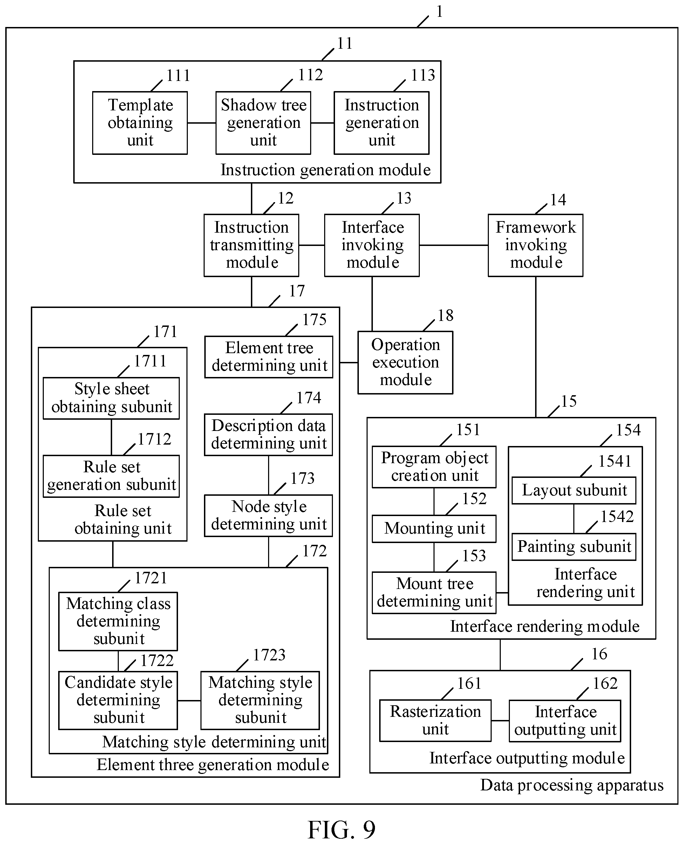

Further, reference may be made to FIG. 9. FIG. 9 is a schematic structural diagram of a data processing apparatus according to some embodiments of the present disclosure. A data processing apparatus 1 may be a computer program (including program code) run on a computer device. For example, the data processing apparatus 1 is application software. The data processing apparatus 1 may be configured to perform the method shown in FIG. 3. As shown in FIG. 9, the data processing apparatus 1 may include an instruction generation module 11, an instruction transmitting module 12, an interface invoking module 13, a framework invoking module 14, an interface rendering module 15, and an interface outputting module 16.

The instruction generation module 11 is configured to generate, in response to an interactive operation for a sub-program application, an interface rendering instruction indicated by the interactive operation, the interface rendering instruction being configured for rendering an interactive interface corresponding to the interactive operation.

The instruction transmitting module 12 is configured to transmit the interface rendering instruction to an execution environment of the sub-program application through a first communication interface if a rendering framework indicated by the interface rendering instruction is a mobile application development framework, the execution environment of the sub-program application being an execution environment of a native application, the native application being a host application of the sub-program application; the first communication interface being a communication interface between a first programming language and a second programming language, the first programming language being a programming language corresponding to the interface rendering instruction, and the second programming language being a programming language corresponding to the native application.

The interface invoking module 13 is configured to invoke, in the execution environment, a second communication interface based on the interface rendering instruction.

The framework invoking module 14 is configured to invoke the mobile application development framework through the second communication interface, the second communication interface being a communication interface between the second programming language and a third programming language, the third programming language being a development language corresponding to the mobile application development framework.

The interface rendering module 15 is configured to render the interactive interface corresponding to the interactive operation based on the mobile application development framework.

The interface outputting module 16 is configured to output the interactive interface.

For specific implementations of the instruction generation module 11, the instruction transmitting module 12, the interface invoking module 13, the framework invoking module 14, the interface rendering module 15, and the interface outputting module 16, reference may be made to the descriptions about operation S101 to operation S104 in the embodiment corresponding to FIG. 3, and details are not described herein again.

In some embodiments, the instruction generation module 11 may include a template obtaining unit 111, a shadow tree generation unit 112, and an instruction generation unit 113.

The template obtaining unit 111 is configured to obtain a page rendering template file of the sub-program application in response to the interactive operation for the sub-program application.

The shadow tree generation unit 112 is configured to invoke a template parser, parse the page rendering template file based on the template parser, to obtain a first parsing result, and generate a style shadow structure tree corresponding to the interactive operation based on the first parsing result, the style shadow structure tree being formed by N shadow nodes, each shadow node including element encapsulation information of one page element, N being a positive integer, the page element being an element configured for constructing the interactive interface.

The instruction generation unit 113 is configured to generate a rendering instruction including the style shadow structure tree, and determine the rendering instruction including the style shadow structure tree as the interface rendering instruction indicated by the interactive operation.

For specific function implementations of the template obtaining unit 111, the shadow tree generation unit 112, and the instruction generation unit 113, reference may be made to descriptions about operation S101 in the embodiment corresponding to FIG. 3, and details are not described herein again.

In some embodiments, the data processing apparatus 1 may further include an element tree generation module 17 and an operation execution module 18.

The element tree generation module 17 is configured to create, in the execution environment, a page element structure tree corresponding to the interactive operation based on the interface rendering instruction, the page element structure tree being formed by N element nodes, one element node corresponding to one page element, and each element node including element description data, one piece of element description data being style description data of one page element, and the page element being an element configured for constructing the interactive interface.

The operation execution module 18 is configured to perform, in response to that creation of the page element structure tree is completed, the operation of invoking, in the execution environment, a second communication interface based on the interface rendering instruction.

For specific function implementations of the element tree generation module 17 and the operation execution module 18, reference may be made to descriptions about operation S103 in the embodiment corresponding to FIG. 3, and details are not described herein again.

In some embodiments, the interface rendering instruction includes a style shadow structure tree corresponding to the interactive operation, the style shadow structure tree being formed by N shadow nodes, each shadow node including element encapsulation information of one page element.

The element tree generation module 17 may include a rule set obtaining unit 171, a matching style determining unit 172, a node style determining unit 173, a description data determining unit 174, and an element tree determining unit 175.

The rule set obtaining unit 171 is configured to obtain a style rule set, the style rule set including an element style rule corresponding to each page configuration element, the page configuration element being a configuration element configured to form an application interface of the sub-program application, the application interface including the interactive interface.

The matching style determining unit 172 is configured to determine, for each shadow node *Sᵢ* in the N shadow nodes, in the style rule set, an element style rule matching the element encapsulation information *Kᵢ*, element encapsulation information included in the shadow node *Sᵢ* being element encapsulation information Kᵢ, N and i being both positive integers.

The node style determining unit 173 is configured to determine, for each shadow node *Sᵢ* in the N shadow nodes, an element style rule matching the element encapsulation information *Kᵢ* as a node element style corresponding to the shadow node Sᵢ.

The description data determining unit 174 is configured to convert the node element style corresponding to the shadow node *Sᵢ* according to a style conversion rule, to obtain element description data corresponding to the shadow node *Sᵢ*.

The element tree determining unit 175 is configured to determine each shadow node as an element node when element description data respectively corresponding to the N shadow nodes is determined, and determine a structure tree formed by the N element nodes including the corresponding element description data as the page element structure tree corresponding to the interactive operation.

For specific implementations of the rule set obtaining unit 171, the matching style determining unit 172, the node style determining unit 173, the description data determining unit 174, and the element tree determining unit 175, reference may be made to descriptions about operation S401 to operation S404 in the embodiment corresponding to FIG. 4, and details are not described herein again.

In some embodiments, the rule set obtaining unit 171 may include a style sheet obtaining subunit 1711 and a rule set generation subunit 1712.

The style sheet obtaining subunit 1711 is configured to obtain a page style configuration table, the page style configuration table including attribute definition information of each page configuration element.

The rule set generation subunit 1712 is configured to invoke a style parser, parse, based on the style parser, the attribute definition information included in the page style configuration table, to obtain a second parsing result, and generate the style rule set based on the second parsing result.

For specific function implementations of the style sheet obtaining subunit 1711 and the rule set generation subunit 1712, reference may be made to descriptions about operation S401 in the embodiment corresponding to FIG. 4, and details are not described herein again.

In some embodiments, the element encapsulation information *Kᵢ* includes node class information of the shadow node *Sᵢ*, the element style rule corresponding to each page configuration element included in the style rule set includes configuration class information.

The matching style determining unit 172 may include a matching class determining subunit 1721, a candidate style determining subunit 1722, and a matching style determining subunit 1723.

The matching class determining subunit 1721 is configured to determine, in configuration class information included in element style rules in the style rule set, configuration class information matching the node class information of the shadow node *Sᵢ* as matching configuration class information.

The candidate style determining subunit 1722 is configured to determine an element style rule corresponding to the matching configuration class information in the style rule set as a candidate element style rule of the shadow node *Sᵢ*.

The matching style determining subunit 1723 is configured to determine determining a matching element style rule matching the element encapsulation information *Kᵢ* according to the candidate element style rule.

For specific function implementations of the matching class determining subunit 1721, the candidate style determining subunit 1722, and the matching style determining subunit 1723, reference may be made to descriptions about operation S402 in the embodiment corresponding to FIG. 4, and details are not described herein again.

In some embodiments, at least two candidate element style rules are provided, the at least two candidate element style rule including a candidate element style rule *Cⱼ*, j being a positive integer, for each candidate element style rule in the at least two candidate element style rules *Cⱼ.*

The matching style determining subunit 1723 is further configured to obtain a style priority attribute *Dⱼ* corresponding to the candidate element style rule *Cⱼ.*

The matching style determining subunit 1723 is further configured to determine a priority weight corresponding to the candidate element style rule *Cⱼ* according to the style priority attribute *Dⱼ.*

The matching style determining subunit 1723 is further configured to: determine, when priority weights respectively corresponding to the at least two candidate element style rules are determined, a candidate element style rule corresponding to a maximum priority weight in the at least two priority weights as the matching element style rule matching the element encapsulation information *Kᵢ.*

In some embodiments, the style priority attribute *Dⱼ* includes a value attribute and a rarity attribute.

The matching style determining subunit 1723 is further configured to obtain a rarity value corresponding to the rarity attribute.

The matching style determining subunit 1723 is further configured to determine, if the value attribute is a value-valid attribute and the rarity value is greater than a rarity threshold, a first weight value matching the rarity value in a first weight range as the priority weight corresponding to the candidate element style rule *Cⱼ.*

The matching style determining subunit 1723 is further configured to determine, if the value attribute is the value-valid attribute and the rarity value is less than the rarity threshold, a second weight value matching the rarity value in a second weight range as the priority weight corresponding to the candidate element style rule *Cⱼ,* a weight value in the second weight range being less than a weight value in the first weight range.

The matching style determining subunit 1723 is further configured to determine, if the value attribute is a value-invalid attribute and the rarity value is greater than the rarity threshold, a third weight value matching the rarity value in a third weight range as the priority weight corresponding to the candidate element style rule *Cⱼ,* a weight value in the third weight range being less than a weight value in the second weight range.

The matching style determining subunit 1723 is further configured to determine, if the value attribute is the value-invalid attribute and the rarity value is less than the rarity threshold, a fourth weight value matching the rarity value in a fourth weight range as the priority weight corresponding to the candidate element style rule *Cⱼ,* a weight value in the fourth weight range being less than a weight value in the third weight range.

In some embodiments, the interface rendering module 15 may include a program object creation unit 151, a mounting unit 152, a mount tree determining unit 153, and an interface rendering unit 154.

The program object creation unit 151 is configured to create, for each element node *Sᵢ* in the N element nodes, a program object corresponding to the shadow node *Sᵢ* in an isolated running environment of the third programming language based on the second communication interface.

The mounting unit 152 is configured to perform, for each element node *Sᵢ* in the N element nodes, a mounting operation on a node element style corresponding to the shadow node *Sᵢ* based on a program object corresponding to the shadow node *Sᵢ*, to obtain a mounted object corresponding to the shadow node *Sᵢ*.

The mount tree determining unit 153 is configured to determine, when mounted objects respectively corresponding to the N shadow nodes are determined, a structure tree formed by the N shadow nodes including the corresponding mounted objects as an element mounting structure tree corresponding to the interactive operation.

The interface rendering unit 154 is configured to render the element mounting structure tree based on the mobile application development framework, to obtain the interactive interface.

For specific function implementations of the program object creation unit 151, the mounting unit 152, the mount tree determining unit 153, and the interface rendering unit 154, reference may be made to descriptions about operation S103 in the embodiment corresponding to FIG. 3, and details are not described herein again.

In some embodiments, the interface rendering unit 154 may include a layout subunit 1541 and a painting subunit 1542.

The layout subunit 1541 is configured to perform interface layout processing on the element mounting structure tree based on the mobile application development framework, to obtain interactive interface layout information of the interactive interface.

The painting subunit 1542 is configured to perform interface painting according to the interactive interface layout information, to obtain a painted interface, and determine the painted interface as the interactive interface.

For specific function implementations of the layout subunit 1541 and the painting subunit 1542, reference may be made to descriptions about operation S 103 in the embodiment corresponding to FIG. 3, and details are not described herein again.

In some embodiments, the interface outputting module 16 may include a rasterization unit 161 and an interface outputting unit 162.

The rasterization unit 161 is configured to rasterize the interactive interface to obtain a rasterized interface.

The interface outputting unit 162 is configured to output the rasterized interface.

For specific function implementations of the rasterization unit 161 and the interface outputting unit 162, reference may be made to descriptions about operation S104 in the embodiment corresponding to FIG. 3, and details are not described herein again.

In some embodiments, a total rendering thread of the sub-program application includes a development logic subthread and an interface rendering subthread, and the operation of generating an interface rendering instruction indicated by the interactive operation and the operation of creating, in the execution environment, a page element structure tree corresponding to the interactive operation based on the interface rendering instruction are both performed in the development logic subthread. The operation of invoking, in the execution environment, a second communication interface based on the interface rendering instruction, invoking the mobile application development framework through the second communication interface, and rendering the interactive interface corresponding to the interactive operation based on the mobile application development framework, is performed in the interface rendering subthread.

In all embodiments of the present disclosure, through the first communication interface and the second communication interface, the host application of the sub-program application may become a communication bridge between the sub-program application and the mobile application development framework, so that the mobile application development framework (the Flutter framework) may be introduced into the sub-program application based on the communication bridge, and rendering can be performed well by using the mobile application development framework in a rendering service of the sub-program application. Because a rendering procedure of the Flutter framework is simple, rendering efficiency of the sub-program application can be improved. In addition, because the Flutter framework has a capability of constructing a native user interface, an interactive interface of a sub-program application obtained through rendering by the Flutter framework has quality the same as that of a native application, and has high quality. Therefore, by introducing the mobile application development framework, in the rendering service of the sub-program application, rendering efficiency can be improved while improving rendering quality. By splitting a part of logic (such as Layout and Paint) into the rendering subthread for execution, a multi-core CPU of the device can be fully utilized, thereby improving parallelism and improving smoothness of interface rendering and interaction. In addition, rendering is performed by using a single-thread model rather than a separate dual-thread model, to reduce a communication loss caused by frequent communication, so that stability of a tree structure can be well maintained, thereby reducing time consumption of rendering and a delay while ensuring security management and control.

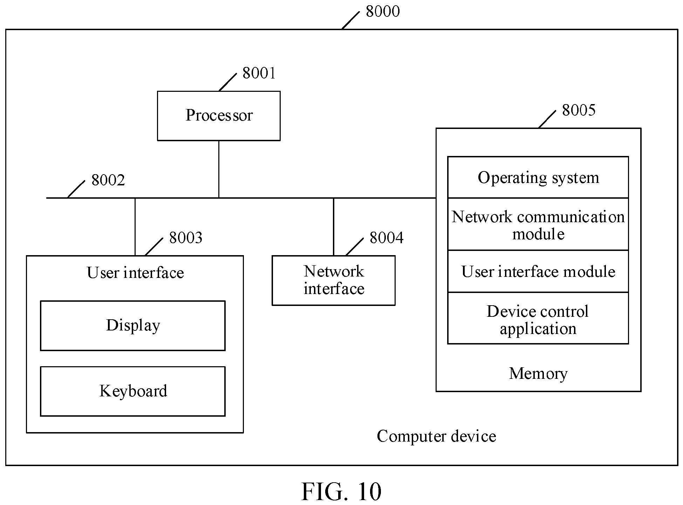

Further, reference may be made to FIG. 10. FIG. 10 is a schematic structural diagram of a computer device according to some embodiments of the present disclosure. As shown in FIG. 10, the data processing apparatus 1 in the embodiment corresponding to FIG. 9 may be used in the foregoing computer device 8000. The computer device 8000 may include a processor 8001, a network interface 8004, and a memory 8005. In addition, the computer device 8000 further includes a user interface 8003 and at least one communication bus 8002. The communication bus 8002 is configured to implement connection and communication between the components. The user interface 8003 may include a display and a keyboard. In some embodiments, the user interface 8003 may further include a standard wired interface and a standard wireless interface. The network interface 8004 may include a standard wired interface and a standard wireless interface (such as a Wi-Fi interface). The memory 8005 may be a high-speed random access memory (RAM), or may be a non-volatile memory, for example, at least one magnetic disk memory. The memory 8005 may further be at least one storage apparatus that is located far away from the processor 8001. As shown in FIG. 10, the memory 8005 used as a computer-readable storage medium may include an operating system, a network communication module, a user interface module, and a device control application.

In the computer device 8000 shown in FIG. 10, the network interface 8004 may provide a network communication function. The user interface 8003 is mainly configured to provide an input interface for a user. The processor 8001 may be configured to invoke the device control application stored in the memory 8005, to implement the following operations:
generate, in response to an interactive operation for a sub-program application, an interface rendering instruction indicated by the interactive operation;
transmit the interface rendering instruction to an execution environment of the sub-program application through a first communication interface if a rendering framework indicated by the interface rendering instruction is a mobile application development framework, the execution environment of the sub-program application being an execution environment of a native application, the native application being a host application of the sub-program application; the first communication interface being a communication interface between a first programming language and a second programming language, the first programming language being a programming language corresponding to the interface rendering instruction, and the second programming language being a programming language corresponding to the native application; and the mobile application development framework being configured to construct a native interactive interface on a native operating system;
invoke, in the execution environment, a second communication interface based on the interface rendering instruction, invoke the mobile application development framework through the second communication interface, and render the interactive interface corresponding to the interactive operation based on the mobile application development framework, the second communication interface being a communication interface between the second programming language and a third programming language, the third programming language being a development language corresponding to the mobile application development framework; and
output the interactive interface.

The computer device 8000 described in this embodiment of the present disclosure can implement the descriptions about the data processing method in the foregoing embodiments corresponding to FIG. 3 and FIG. 4, and can also implement the descriptions about the data processing apparatus 1 in the foregoing embodiment corresponding to FIG. 9. Details are not described herein again. In addition, the description of beneficial effects of the same method is not described herein again.

In addition, some embodiments of the present disclosure further provide a computer-readable storage medium. The computer-readable storage medium stores a computer program executed by the computer device 8000 for data processing mentioned above, and the computer program includes program instructions. When executing the program instructions, the processor can perform the descriptions of the data processing method in all embodiments corresponding to FIG. 3 and FIG. 4. Therefore, details are not described herein again. In addition, for the descriptions about beneficial effects of adopting the same method, details are not described herein again. For technical details that are not disclosed in the embodiments of the computer-readable storage medium included in the present disclosure, reference may be made to the descriptions about the method embodiments of the present disclosure.

The computer-readable storage medium may be a data processing apparatus or an internal storage unit of the foregoing computer device, for example, a hard drive or a memory of the computer device, provided in any one of the foregoing embodiments. The computer-readable storage medium may alternatively be an external storage device of the computer device, for example, a removable hard drive, a smart memory card (SMC), a secure digital (SD) card, or a flash card equipped on the computer device. Further, the computer-readable storage medium may also include both an internal storage unit and an external storage device of the computer device. The computer-readable storage medium is configured to store the computer program and another program and data that are required by the computer device. The computer-readable storage medium may also be configured to temporarily store data that has been outputted or to-be-outputted data.

According to an aspect of the present disclosure, a computer program product or a computer program is provided. The computer program product or the computer program includes computer instructions, and the computer instructions are stored in a computer-readable storage medium. A processor of a computer device reads the computer instructions from the computer-readable storage medium. The processor executes the computer instructions, to cause the computer device to perform the method provided by an aspect in the embodiments of the present disclosure.

In the specification, claims, and accompanying drawings of the present disclosure, the terms "first" and "second" are intended to distinguish between different objects but do not indicate a particular order. In addition, terms, such as "include", and any variations thereof are intended to indicate non-exclusive inclusion. For example, a process, method, apparatus, product, or device that includes a series of operations or units is not limited to the listed operations or units; and instead, in some embodiments, further includes an operation or unit that is not listed, or in some embodiments, further includes another operation or unit that is intrinsic to the process, method, apparatus, product, or device.

A person of ordinary skill in the art may be aware that, with reference to the exemplary units and algorithm operations described in the embodiments disclosed in this specification, the present disclosure may be implemented by electronic hardware, computer software, or a combination thereof. To clearly describe interchangeability between the hardware and the software, the exemplary compositions and operations have been generally described according to functions in the foregoing descriptions. Whether the functions are performed by hardware or software depends on particular applications and design constraint conditions of the technical solutions. A person skilled in the art may use different methods to implement the described functions for each particular application, but such implementation is not to be considered as going beyond the scope of the present disclosure.

The method and relevant apparatus provided in the embodiments of the present disclosure are described with reference to the method flowcharts and/or the schematic structural diagrams provided in the embodiments of the present disclosure. Specifically, each procedure and/or each block in the method flowcharts and/or the schematic structural diagrams and a combination of procedures and/or blocks in flowcharts and/or block diagrams may be implemented using computer program instructions. The computer program instructions may be provided to a general-purpose computer, a dedicated computer, an embedded processor, or a processor of another programmable data processing device to generate a machine, so that the instructions executed by the computer or the processor of the another programmable data processing device generate an apparatus for implementing a specified function in one or more procedures in the flowcharts and/or in one or more blocks in the schematic structural diagrams. The computer program instructions may also be stored in a computer-readable memory that can instruct a computer or another programmable data processing device to work in a specific manner, so that the instructions stored in the computer-readable memory generate an artifact that includes an instruction apparatus. The instruction apparatus implements a specified function in one or more procedures in the flowcharts and/or in one or more blocks in the schematic structural diagrams. The computer program instructions may also be loaded onto a computer or another programmable data processing device, so that a series of operations are performed on the computer or the another programmable device, thereby generating computer-implemented processing. Therefore, the instructions executed on the computer or the another programmable device provide operations for implementing a specified function in one or more procedures in the flowcharts and/or in one or more blocks in the schematic structural diagrams.

Disclosed above are merely exemplary embodiments of the present disclosure, and are certainly not intended to limit the patent scope of the present disclosure. Therefore, an equivalent change made according to the claims of the present disclosure still falls within the scope of the present disclosure.

## Claims

1. A data processing method, performed by a computer device, the method comprising:
generating, in response to an interactive operation in a sub-application running in a native application, an interface rendering instruction for rendering an interactive interface of the sub-application corresponding to the interactive operation;
if a rendering framework of the interactive interface indicated by the interface rendering instruction is a mobile application development framework, transmitting the interface rendering instruction to an execution environment of the native application through a first communication interface between the sub-application and the native application; the mobile application development framework being configured to construct a native interface on a native operating system for running the native application;
invoking, in the execution environment, a second communication interface between the native application and the mobile application development framework to invoke the mobile application development framework, and rendering the interactive interface of the sub-application based on the mobile application development framework; and
outputting the rendered interactive interface.

2. The method according to claim 1, wherein the interface rendering instruction comprises a style shadow structure tree representing service data of the interactive operation; the generating, in response to the interactive operation in the sub-application, the interface rendering instruction comprises:
obtaining a page rendering template file of the sub-application in response to the interactive operation;
parsing the page rendering template file by a template parser to obtain a first parsing result, and generating a style shadow structure tree corresponding to the interactive operation based on the first parsing result, the style shadow structure tree comprising N shadow nodes, each shadow node comprising element encapsulation information of one page element for constructing the interactive interface, N being a positive integer; and
generating the rendering instruction comprising the style shadow structure tree.

3. The method according to claim 1, further comprising:
creating, in the execution environment, a page element structure tree corresponding to the interactive operation based on the interface rendering instruction, the page element structure tree comprising N element nodes, one element node corresponding to one page element for constructing the interactive interface, and each element node comprising element description data configured to describe style description data of the page element corresponding to the element node; and
performing, in response to that creation of the page element structure tree is completed, the operation of invoking, in the execution environment, the second communication interface.

4. The method according to claim 3, wherein the interface rendering instruction comprises a style shadow structure tree corresponding to the interactive operation, the style shadow structure tree comprising N shadow nodes, each shadow node comprising element encapsulation information of one page element; and
the creating, in the execution environment, the page element structure tree corresponding to the interactive operation based on the interface rendering instruction comprises:
obtaining a style rule set, the style rule set comprising an element style rule corresponding to each page element configured for constructing the interactive interface;
performing the following operations for each shadow node *Sᵢ* in the N shadow nodes, element encapsulation information comprised in the shadow node *Sᵢ* being element encapsulation information *Kᵢ,* N and i being both positive integers:
determining, in the style rule set, an element style rule matching the element encapsulation information *Kᵢ,* and determining the matching element style rule as a node element style corresponding to the shadow node *Sᵢ;* and
converting the node element style corresponding to the shadow node *Sᵢ* according to a style conversion rule, to obtain element description data corresponding to the shadow node *Sᵢ;* and
when element description data respectively corresponding to the N shadow nodes is determined, creating the page element structure tree formed by the N element nodes comprising the corresponding element description data.

5. The method according to claim 4, wherein the obtaining a style rule set comprises:
obtaining a page style configuration table, the page style configuration table comprising attribute definition information of each page configuration element; and
invoking a style parser, parsing, based on the style parser, the attribute definition information comprised in the page style configuration table, to obtain a second parsing result, and generating the style rule set based on the second parsing result.

6. The method according to claim 4, wherein the element encapsulation information *Kᵢ* comprises node class information of the shadow node *Sᵢ*, the element style rule corresponding to each page configuration element comprised in the style rule set comprises configuration class information; and
the determining, in the element style rule set, an element style rule matching the element encapsulation information *Kᵢ* comprises:
determining, in configuration class information comprised in element style rules in the style rule set, configuration class information matching the node class information of the shadow node *Sᵢ* as matching configuration class information;
determining an element style rule corresponding to the matching configuration class information in the style rule set as a candidate element style rule of the shadow node *Sᵢ*; and
determining, according to the candidate element style rule, the element style rule matching the element encapsulation information *Kᵢ.*

7. The method according to claim 6, wherein at least two candidate element style rules are provided; and
the determining, according to the candidate element style rule, the element style rule matching the element encapsulation information *Kᵢ* comprises:
performing the following operations for each candidate element style rule *Cⱼ* in the at least two candidate element style rules, j being a positive integer:
obtaining a style priority attribute *Dⱼ* corresponding to the candidate element style rule *Cⱼ*;
determining a priority weight corresponding to the candidate element style rule *Cⱼ* according to the style priority attribute *Dⱼ;* and
determining, when priority weights respectively corresponding to the at least two candidate element style rules are determined, a candidate element style rule corresponding to a maximum priority weight in the at least two priority weights as the element style rule matching the element encapsulation information *Kᵢ.*

8. The method according to claim 7, wherein the style priority attribute *Dⱼ* comprises a value attribute and a rarity attribute; and
the determining a priority weight corresponding to the candidate element style rule *Cⱼ* according to the style priority attribute *Dⱼ* comprises:
obtaining a rarity value corresponding to the rarity attribute;
determining, if the value attribute is a value-valid attribute and the rarity value is greater than a rarity threshold, a first weight value matching the rarity value in a first weight range as the priority weight corresponding to the candidate element style rule *Cⱼ;*
determining, if the value attribute is the value-valid attribute and the rarity value is less than the rarity threshold, a second weight value matching the rarity value in a second weight range as the priority weight corresponding to the candidate element style rule *Cⱼ,* a weight value in the second weight range being less than a weight value in the first weight range;
determining, if the value attribute is a value-invalid attribute and the rarity value is greater than the rarity threshold, a third weight value matching the rarity value in a third weight range as the priority weight corresponding to the candidate element style rule *Cⱼ*, a weight value in the third weight range being less than a weight value in the second weight range; and
determining, if the value attribute is the value-invalid attribute and the rarity value is less than the rarity threshold, a fourth weight value matching the rarity value in a fourth weight range as the priority weight corresponding to the candidate element style rule *Cⱼ,* a weight value in the fourth weight range being less than a weight value in the third weight range.

9. The method according to claim 4, wherein the rendering the interactive interface of the sub-application based on the mobile application development framework comprises:
performing the following operations for each element node *Sᵢ* in the N element nodes:
creating a program object corresponding to the element node *Sᵢ* in an isolated running environment of the mobile application development framework; and
mounting element description data corresponding to the element node *Sᵢ* based on the program object corresponding to the element node *Sᵢ*, to obtain a mounted object corresponding to the element node *Sᵢ;*
determining, when mounted objects respectively corresponding to the N element nodes are determined, a structure tree formed by the N element nodes comprising the corresponding mounted objects as an element mounting structure tree corresponding to the interactive operation; and
rendering the element mounting structure tree based on the mobile application development framework, to obtain the interactive interface.

10. The method according to claim 9, wherein the rendering the element mounting structure tree based on the mobile application development framework, to obtain the interactive interface, comprises:
configuring interface layout of the element mounting structure tree based on the mobile application development framework, to obtain interactive interface layout information of the interactive interface; and
painting the interactive interface according to the interactive interface layout information.

11. The method according to claim 1, wherein the outputting the rendered interactive interface comprises:
rasterizing the rendered interactive interface to obtain a rasterized interface; and
outputting the rasterized interface.

12. The method according to any one of claims 1 to 3, wherein a rendering thread of the sub-application comprises a development logic subthread and an interface rendering subthread, and the operation of generating an interface rendering instruction and the operation of creating, in the execution environment, the page element structure tree corresponding to the interactive operation based on the interface rendering instruction are both performed in the development logic subthread; and the operation of invoking, in the execution environment, the second communication interface to invoke the mobile application development framework, and rendering the interactive interface based on the mobile application development framework are performed in the interface rendering subthread.

13. A data processing apparatus, comprising:
an instruction generation module, configured to generate, in response to an interactive operation in a sub-application running in a native application, an interface rendering for rendering an interactive interface of the sub-application corresponding to the interactive operation;
an instruction transmitting module, configured to transmit, if a rendering framework of the interactive interface indicated by the interface rendering instruction is a mobile application development framework, the interface rendering instruction to an execution environment of the native application through a first communication interface between the sub-application and the native application; the mobile application development framework being configured to construct a native interactive interface on a native operating system and
an interface invoking module, configured to invoke, in the execution environment, a second communication interface between the native application and the mobile application development framework;
an interface rendering module, configured to invoke the mobile application development framework through the second communication interface, and render the interactive interface of the sub-application based on the mobile application development framework; and
an interface outputting module, configured to output the interactive interface.

14. A computer device, comprising a processor, a memory, and a network interface,
the processor being connected to the memory and the network interface, the network interface being configured to provide a network communication function, the memory being configured to store a computer program, and the processor being configured to invoke the computer program, to cause the computer device to perform the method according to any one of claims 1 to 12.

15. A computer-readable storage medium, having a computer program stored therein, the computer program being adapted to be loaded and executed by a processor to implement the method according to any one of claims 1 to 12.

16. A computer program product, comprising a computer program, the computer program being stored in a computer-readable storage medium and being adapted to be read and executed by a processor, to cause a computer device comprising the processor to perform the method according to any one of claims 1 to 12.
